# DEMANDE DE BREVET EUROPEEN

(11) **EP 4 187 391 A1**
(43) Date de publication de la demande: **31.05.2023**
(21) Numéro de dépôt: 22207120.1
(22) Date de dépôt: 14.11.2022
(51) Int. Cl.: G06F 12/14

(54) **GESTION D'UN PARE-FEU DE MÉMOIRE DANS UN SYSTÈME SUR PUCE**

(30) Priorité: 25.11.2021 FR 2112501
(71) Demandeur: STMicroelectronics (ALPS) SAS, 38000 Grenoble (FR); STMicroelectronics (Grand Ouest) SAS, 72100 Le Mans (FR)
(72) Inventeur: PALLARDY, Loic, 72700 Rouillon (FR); ANQUET, Nicolas, 38000 Grenoble (FR)
(74) Mandataire: Casalonga

(57) **Abrégé**

Au moins une ressource esclave du système sur puce contient un dispositif de mémoire (IMM1) incluant au moins une première zone mémoire. Un premier équipement maître (CPU1) est configuré pour définir des droits d'accès initiaux pour cette première zone mémoire, et pour déléguer, au moins temporairement, la gestion des accès de ladite au moins une première zone mémoire, à un deuxième équipement maître (CPU2), ce deuxième équipement maître étant configuré pour définir pour ladite au moins une première zone mémoire, des droits d'accès particuliers à partir des droits d'accès initiaux associés à cette première zone mémoire et de règles de droits d'accès. Des moyens de vérification (RISU1) sont configurés pour vérifier si une transaction destinée à ladite au moins une première zone mémoire, est bien autorisée à accéder à cette première zone mémoire en utilisant des droits d'accès associés à cette zone mémoire et en vigueur lors de la réception de ladite transaction, les droits d'accès en vigueur incluant les droits d'accès initiaux ou les droits d'accès particuliers, ou d'autres droits d'accès.

## Description

Des modes de mise en œuvre et de réalisation concernent les circuits intégrés, notamment les systèmes sur puce (SoC : System on Chip), par exemple un microcontrôleur (multi-cœurs ou mono-cœur), ou un microprocesseur, par exemple la gestion du fonctionnement d'un tel système sur puce et plus particulièrement la gestion des accès à une mémoire partitionnée en plusieurs zones mémoires et la gestion de la configuration du pare-feu d'une telle mémoire.

Afin de contribuer à garantir la fiabilité d'un système sur puce, il peut être requis de restreindre l'accès d'un ou de plusieurs équipements maîtres à des ressources esclaves spécifiques. Une telle caractéristique est désignée par l'homme du métier sous le vocable anglosaxon de « firewall ou isolation ».

Il est également possible de rendre une gestion de ces restrictions d'accès simple à mettre en œuvre et à implémenter tout particulièrement dans le cas où cette gestion est dynamique, par exemple lorsqu'elle dépend des applications envisagées pour le système sur puce, par exemple des applications envisagées sur les multiples cœurs de la puce.

Il est encore possible de proposer un système sur puce, par exemple un microcontrôleur ou un microprocesseur, permettant tous les cas d'utilisation émanant des divers utilisateurs du système sur puce ainsi que toutes les configurations d'une manière flexible, et incluant en particulier un mode basse consommation (low power mode).

La demande de brevet français publiée sous le n° 3103586 décrit un exemple d'un système sur puce présentant les avantages mentionnés ci-avant.

Cela étant il existe encore un besoin d'améliorer un tel système sur puce notamment en ce qui concerne la gestion des accès à une mémoire et la gestion de la configuration de son pare-feu, en particulier lorsque cette mémoire est partitionnée en plusieurs zones mémoires.

Plus généralement il existe un besoin de rendre plus simple la configuration du pare-feu d'une mémoire, interne à un système sur puce ou externe mais couplée au système sur puce, en particulier lors de la modification des droits d'accès à une partie de la mémoire, ou encore lorsque le système sur puce est dans un mode basse consommation (« low power »).

Selon un aspect, il est proposé un système sur puce comprenant plusieurs équipements maîtres, par exemple, lorsque le système forme en particulier un microcontrôleur, au moins un microprocesseur et généralement plusieurs microprocesseurs, un contrôleur d'accès direct en mémoire (DMA : Direct Memory Access...) sans que ces exemples ne soient limitatifs.

Le système sur puce comporte par ailleurs plusieurs ressources esclaves.

A titre d'exemple non limitatif, une ressource esclave peut appartenir au groupe formé par au moins un périphérique, par exemple un périphérique du type I²C (« Inter Integrated Circuit »), du type SPI (« Serial Peripheral Interface), du type UART (« Universal Asynchronous Receiver Transmitter), ou bien une horloge temps réel (RTC « Real Time Clock »), une fonctionnalité (« feature » en langue anglaise) d'un périphérique, par exemple une ligne d'alarme du périphérique RTC.

Le système sur puce comporte également au moins une ressource esclave contenant un dispositif de mémoire incluant au moins une première zone-mémoire.

Le terme « dispositif de mémoire » doit être pris ici dans un sens très large englobant par exemple, un moyen de mémoire interne au système sur puce, ou une interface mémoire interne au système sur puce et destinée à être couplée à un moyen de mémoire externe au système sur puce, par exemple une mémoire du type DDR SRAM (« Double Data Rate Synchronous Dynamic Random Access Memory»).

Le système sur puce comporte par ailleurs un système d'interconnexion (connu par l'homme du métier sous la dénomination anglosaxonne « interconnect ») couplé entre les équipements maîtres et les ressources esclaves et capable de router des transactions (par exemple des transactions d'écriture ou de lecture) entre les équipements maîtres et les ressources esclaves.

Parmi les équipements maîtres, un premier équipement maître, par exemple mais non limitativement, un microprocesseur, est configuré pour définir (par exemple lors de l'exécution d'un programme utilisateur après une phase de démarrage à froid (« cold boot »)) des droits d'accès initiaux pour cette première zone mémoire, et pour déléguer, au moins temporairement, la gestion des accès de ladite au moins une première zone mémoire à un deuxième équipement maître.

Ce deuxième équipement maître, de préférence différent du premier équipement maître, est configuré pour définir, pour ladite au moins une première zone mémoire, des droits d'accès particuliers à partir des droits d'accès initiaux associés à cette première zone mémoire et de règles de droits d'accès.

Ces règles de droits d'accès peuvent être incorporées de façon logicielle dans le programme exécuté par le deuxième équipement maître et peuvent être également codées en dur.

Le système comprend en outre des moyens de vérification (faisant office de pare-feu) configurés pour vérifier si une transaction destinée à ladite au moins une première zone-mémoire, est bien autorisée à accéder à cette première zone mémoire en utilisant des droits d'accès associés à cette zone mémoire et en vigueur lors de la réception de ladite transaction.

Les droits d'accès dits en vigueur incluent les droits d'accès initiaux ou les droits d'accès particuliers, ou d'autres droits d'accès.

En effet comme on le verra plus en détails ci-après, il est possible que le deuxième équipement maître affecte des droits d'accès particuliers pour l'ensemble de la première zone mémoire.

Cela étant, selon un mode de réalisation possible, au moins une première zone mémoire peut être partitionnée en plusieurs sous-zones mémoires et le deuxième équipement maître qui a obtenu délégation pour cette première zone mémoire est configuré pour attribuer des droits d'accès respectifs pour ces sous-zones mémoires.

Ainsi ces sous-zones mémoires peuvent être disjointes, accolées ou non, ou bien chevauchantes.

Les droits d'accès à des sous-zones mémoires peuvent être des droits d'accès particuliers tandis qu'une sous-zone mémoire située entre deux sous-zones mémoires affectées de droits d'accès particuliers, peut par exemple conserver ses droits d'accès initiaux qui avaient été définis par le premier équipement maître.

De même puisque la délégation peut être temporaire, il est possible comme on le verra ci-après que le premier équipement maître retire cette délégation et reprenne la main sur la gestion des droits d'accès de cette première zone mémoire.

Dans ce cas il peut conserver les droits d'accès initiaux ou bien définir d'autres droits d'accès, différents des droits d'accès initiaux et particuliers.

De même il est possible d'activer ou non le pare-feu, temporairement par exemple.

Ainsi si le pare-feu n'est pas activé, il n'y a pas de filtre sur les droits d'accès et toute transaction, émanant d'un équipement maître quelconque, peut alors par exemple accéder à la première zone mémoire.

Déléguer la gestion du pare-feu et donc la gestion des droits d'accès à un deuxième équipement maître, permet notamment de changer facilement les droits d'accès à une zone mémoire dans le cadre d'un ordonnancement de tâches (« task scheduling »), de partager facilement une mémoire tampon (« buffer ») avec une autre région mémoire d'exécution, ou encore d'être compatible avec un mode de fonctionnement basse consommation dans lequel le premier équipement maître serait en veille et où il serait néanmoins nécessaire de gérer localement des accès mémoires à une mémoire.

Ainsi il est possible, moyennant par exemple le respect de règles, de passer outre certains paramètres du pare-feu qui avaient été programmés à l'initialisation par le premier équipement maître, sans qu'il soit nécessaire de repasser par le premier équipement maître.

En d'autres termes contrairement à des systèmes sur puce de l'art antérieur, on peut autoriser un control local de pare-feu d'une mémoire ou d'une zone mémoire par le « propriétaire » de la mémoire lui-même, c'est-à-dire celui qui va en particulier utiliser cette mémoire, en l'espèce le deuxième équipement maître.

Le dispositif mémoire peut inclure plusieurs premières zones mémoires et le premier équipement maître peut être configuré pour définir des droits d'accès initiaux pour chaque première zone mémoire, et pour déléguer respectivement, au moins temporairement, les gestions des accès des premières zones mémoires à plusieurs deuxièmes équipements maîtres, différents ou non.

Comme indiqué précédemment, le premier équipement maître peut être en outre configuré pour, après avoir délégué la gestion des accès d'une première zone mémoire au deuxième équipement maître correspondant, retirer cette délégation et reprendre la gestion des accès à cette première zone mémoire, ou éventuellement redonner délégation à un autre deuxième équipement maître.

Le premier équipement maître peut être aussi configuré pour, après avoir retiré une délégation, ne pas être autorisé à accorder une nouvelle délégation pour la gestion des accès à la première zone mémoire concernée.

Selon un mode de réalisation, le dispositif de mémoire peut inclure au moins une deuxième zone mémoire et le premier équipement maître peut être en outre configuré pour définir des droits d'accès initiaux pour cette deuxième zone mémoire et pour ne pas être autorisé à déléguer la gestion des accès à cette ou ces deuxièmes zones mémoires.

Les différentes zones mémoires peuvent être des régions définies par une adresse mémoire de début et une adresse mémoire de fin.

Les différentes zones mémoires peuvent être aussi des pages mémoire.

Selon un autre aspect il est proposé un procédé de gestion des accès à au moins un dispositif de mémoire d'un système sur puce, le système sur puce comprenant plusieurs équipements maîtres, plusieurs ressources esclaves, et un circuit d'interconnexion couplé entre les équipements maîtres et les ressources esclaves et capable de router des transactions entre des équipements maîtres et des ressources esclaves, au moins une ressource esclave contenant ledit au moins un dispositif de mémoire incluant au moins une première zone mémoire, le procédé comprenant :
- faire définir par un premier équipement maître des droits d'accès initiaux pour cette première zone mémoire,
- faire déléguer, au moins temporairement, par le premier équipement maître à un deuxième équipement maître, la gestion des accès de ladite au moins une première zone mémoire,
- faire définir par ce deuxième équipement maître pour ladite au moins une première zone mémoire, des droits d'accès particuliers à partir des droits d'accès initiaux associés à cette première zone mémoire et de règles de droits d'accès, et
- vérifier si une transaction destinée à ladite au moins une première zone mémoire, est bien autorisée à accéder à cette première zone mémoire en utilisant des droits d'accès associés à cette zone mémoire et en vigueur lors de la réception de ladite transaction, les droits d'accès en vigueur incluant les droits d'accès initiaux ou les droits d'accès particuliers, ou d'autres droits d'accès.

Selon un mode de mise en œuvre dans lequel le dispositif mémoire inclut plusieurs premières zones mémoires, le procédé comprend :
- faire définir par le premier équipement maître des droits d'accès initiaux pour chaque première zone mémoire, et
- faire déléguer par le premier équipement maître respectivement, au moins temporairement, les gestions des accès des premières zones mémoires à plusieurs deuxièmes équipements maîtres.

Selon un mode de mise en œuvre dans lequel la première zone mémoire correspondante inclut plusieurs sous-premières zones mémoires, le procédé comprend :
- faire gérer par chaque deuxième équipement maître les accès de ces sous-premières zones mémoires.

Selon un mode de mise en œuvre, le procédé comprend en outre faire retirer par un premier équipement maître, après qu'il a délégué la gestion des accès d'une première zone mémoire au deuxième équipement maître correspondant, cette délégation et faire reprendre par le premier équipement maître, la gestion des accès à cette première zone mémoire.

Selon un mode de mise en œuvre dans lequel le dispositif mémoire inclut au moins une deuxième zone mémoire, le procédé comprend en outre :
- faire définir par le premier équipement maître des droits d'accès initiaux pour cette deuxième zone mémoire et ne pas autoriser le premier équipement maître à déléguer la gestion des accès à cette ou ces deuxièmes zones mémoires.

Le système sur puce peut former un microcontrôleur ou un microprocesseur.

D'autres avantages et caractéristiques de l'invention apparaîtront à l'examen de la description détaillée de modes de réalisation et de mise en œuvre, nullement limitatifs, et des dessins annexés sur lesquels :
[Fig 1]
[Fig 2]
[Fig 3]
[Fig 4]
[Fig 5]
[Fig 6]
[Fig 7]
[Fig 8]
[Fig 9]
[Fig 10]
[Fig 11]
[Fig 12]
   illustrent de façon schématique des modes de mise en œuvre et de réalisation de l'invention.

L'invention s'applique à tout type de système sur puce comprenant plusieurs équipements maîtres, plusieurs ressources esclaves, et un circuit d'interconnexion couplé entre les équipements maîtres et les ressources esclaves et capable de router des transactions entre des équipements maîtres et des ressources esclaves.

L'invention s'applique en particulier à système sur puce tel que celui décrit dans la demande de brevet français n° 3103586 mentionnée ci-avant, dont certaines caractéristiques générales, relatives notamment au schéma de configuration, à l'identification des équipements maîtres et des ressources esclaves, ainsi qu'à la structure des transactions, seront reprises ci-après.

Toutefois l'homme du métier pourra se référer à toutes fins utiles à cette demande de brevet français, dont le contenu est incorporé, par référence, à la présente demande de brevet.

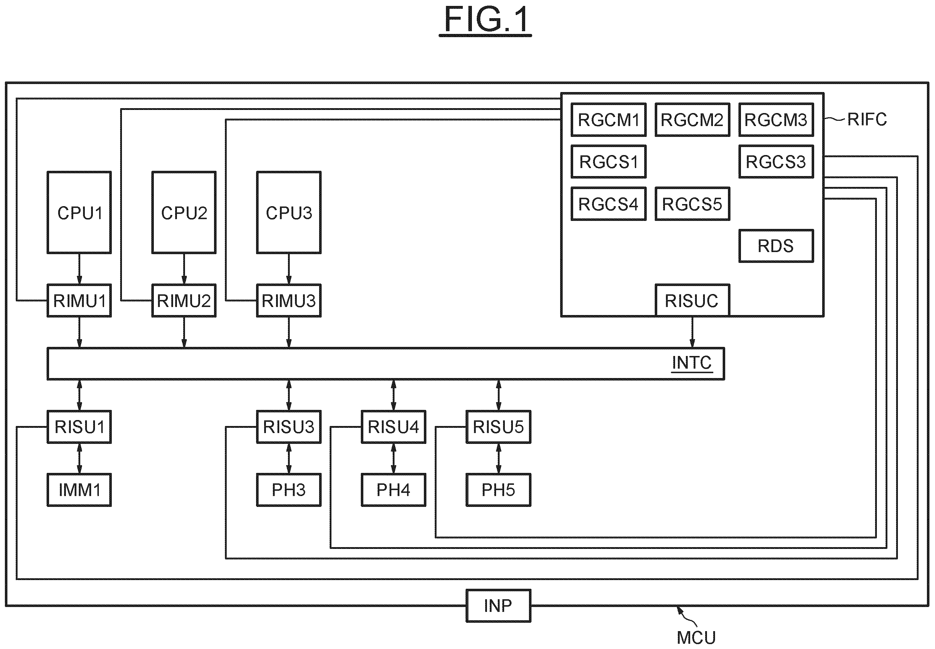

Sur la figure 1, la référence MCU désigne un système sur puce (« System On Chip ») formant ici un microcontrôleur, bien que cet exemple ne soit pas limitatif.

Le système sur puce MCU comprend ici plusieurs équipements maîtres dont seulement trois référencés CPU1, CPU2, CPU3 sont représentés ici à des fins de simplification.

Dans cet exemple, les équipements maîtres CPU1, CPU2 et CPU3 sont des microprocesseurs et les autres équipements maîtres peuvent être par exemple des équipements maîtres de type accès direct en mémoire (DMA : Direct Memory Access) ou bien par exemple des contrôleurs USB ou encore un équipement maître du type PCI express, sans que cette liste d'exemples ne soit exhaustive.

Le système sur puce MCU comporte également plusieurs ressources esclaves dont seulement quatre, référencées IMM1, PH3, PH4, PH5, sont représentées ici à des fins de simplification.

D'une façon générale, une ressource esclave appartient au groupe formé au moins par un périphérique, une fonctionnalité d'un périphérique, un moyen de mémoire interne au système sur puce MCU, une interface mémoire interne au système sur puce et destinée à être couplée à un moyen de mémoire externe au système sur puce.

Ainsi, dans l'exemple illustré, la ressource esclave IMM1 est un dispositif de mémoire, et plus particulièrement une mémoire interne au système sur puce.

Les ressources esclaves PH3, PH4 et PH5 sont des périphériques, par exemple un périphérique du type UART, un contrôleur I²C, un contrôleur SPI.

La structure des équipements maîtres et des ressources esclaves est classique et connue en soi.

Le système sur puce MCU comporte par ailleurs un circuit d'interconnexion INTC capable de router des transactions entre des équipements maîtres et des ressources esclaves.

La structure d'un tel circuit d'interconnexion, qui est en général un circuit d'interconnexion multicouches, ainsi que le protocole permettant l'échange et le routage des transactions à l'intérieur du circuit d'interconnexion sont bien connus de l'homme du métier.

Celui-ci pourra par exemple se référer notamment :
- à l'article de Venkateswara Rao et autres intitulé « A Frame work on AMBA bus based Communication Architecture to improve the Real Time Computing Performance in MPSoC », International Journal of Computer Applications (0975-8887), Volume 91 - N° 5, Avril 2014, ou
- à une présentation générale de ces circuits d'interconnexion effectuée en 2015 par A. Gerstlauer et disponible à l'adresse internet http://users.ece.utexas.edu/~gerstl/ee382v_f14/lectures/lecture_12.pdf.

Par ailleurs, à titre indicatif mais non limitatif, on peut utiliser par exemple le circuit d'interconnexion commercialisé par la société ARM sous la référence NIC-400 (version R0p3).

Le système sur puce comporte également, associé à chaque équipement maître et à chaque ressource esclave, un jeu de registres de configuration comportant plusieurs registres de configuration destinés à stocker respectivement des informations de configuration dont on reviendra plus en détail ci-après sur la signification.

La référence RGCM1 désigne le jeu de registres de configuration associé à l'équipement maître CPU1.

La référence RGCM2 désigne le jeu de registres de configuration associé à l'équipement maître CPU2.

La référence RGCM3 désigne le jeu de registres de configuration affecté à l'équipement maître CPU3.

La référence RGCS1 désigne le jeu de registres de configuration affecté à la ressource esclave IMM1.

La référence RGSC3 désigne le jeu de registres de configuration associé au périphérique PH3.

La référence RGCS4 désigne le jeu de registres de configuration affecté au périphérique PH4.

La référence RGCS5 désigne le jeu de registres de configuration affecté au périphérique PH5.

Par ailleurs, il est prévu dans cet exemple, un registre RDS, dit registre de désignation, dont on reviendra plus en détail sur la fonctionnalité mais dont on peut d'ores et déjà indiquer qu'il sert à désigner un équipement maître, en tant que premier équipement maître, ayant la qualité d'équipement maître gestionnaire.

Les différents jeux de registres de configuration sont représentés ici au sein d'un contrôleur RIFC.

Cela étant, ils pourraient être disposés à l'extérieur du contrôleur.

Le système sur puce MCU comporte également, associé à chaque équipement maître, une unité de gestion élémentaire RIMU1, RIMU2, RIMU3.

On reviendra plus en détail sur la structure et la fonctionnalité de ces unités de gestion élémentaire mais on peut d'ores et déjà dire qu'ils font partie de moyens d'adjonction destinés à ajouter à toute transaction émise par un équipement maître, une information d'identification CID et éventuellement une information de sécurité et/ou une information de privilège.

Le système sur puce comporte également, associé à chaque ressource esclave, un module de vérification élémentaire RISU1, RISU3, RISU4, RISU5, dont on reviendra également plus en détail ci-après sur la structure et la fonctionnalité.

On peut d'ores et déjà dire que ces modules de vérification élémentaire font partie des moyens de vérification destinés à vérifier si une transaction destinée à une ressource esclave est bien autorisée à accéder à cette ressource esclave.

Les différentes unités de gestion élémentaire RIMU et les différents modules de vérification élémentaire RISU sont respectivement connectés aux jeux de registres de configuration correspondants par des liaisons spécifiques, par exemple des pistes métalliques.

Alors que les modules de vérification élémentaires RISUi ont été représentés sur la figure 1 à l'extérieur des périphériques correspondants, il est tout à fait possible de prévoir un ou plusieurs périphériques ayant leur module de vérification élémentaire correspondant, intégré au périphérique lui-même.

Comme on le verra plus en détails ci-après, le module RISU1 et les registres associés RGCS1 font office de pare-feu pour la mémoire IMM1, la gestion de ce pare-feu initialement confiée au premier équipement maître ou équipement gestionnaire, pouvant sous certaines conditions, être déléguée, au moins temporairement, pour certaines zones-mémoires de la mémoire IMM1, à un deuxième équipement maître.

Mais avant de détailler ceci, on rappelle ici brièvement certaines fonctionnalités et caractéristiques du système sur puce. L'homme du métier pourra éventuellement se référer à la demande de brevet français précitée pour plus de détails. D'autres fonctionnalités et caractéristiques du système sur puce, non nécessaires à la mise en œuvre de l'invention, comme par exemple la possibilité de changer d'équipement gestionnaire, décrites dans la demande de brevet français précitée et pouvant néanmoins être implémentées dans le présent système sur puce, ne seront pas décrites ici à des fins de simplification.

Le système sur puce MCU comporte des moyens de traitement, répartis notamment au sein des différents éléments qui ont été décrits en référence à la figure 1, et configurés pour permettre à un utilisateur du système sur puce d'implémenter au sein du système sur puce, au cours d'une phase de configuration, un schéma de configuration qui est défini par l'ensemble des informations de configuration qui vont être stockées dans les différents jeux de registres de configuration.

Avant de revenir plus en détail sur la constitution de ces informations de configuration, on peut d'ores et déjà noter que l'utilisateur a la possibilité d'implémenter une configuration statique ou dynamique.

On suppose ici à titre d'exemple que le schéma de configuration correspond à un schéma initial restant valable au cours de l'utilisation ou phase de fonctionnement du système sur puce (configuration statique).

Plus précisément, à titre d'exemple, le premier équipement maître gestionnaire est configuré pour, en réponse à un premier démarrage ou démarrage à froid (« cold boot ») du système sur puce, effectuer une phase de démarrage à l'issue de laquelle ce premier équipement maître gestionnaire est configuré pour au moins permettre l'implémentation du schéma initial de configuration.

La désignation du premier équipement maître gestionnaire peut être fixée lors de la réalisation du système sur puce MCU, par exemple par un codage en dur.

En variante, il est possible pour l'utilisateur d'utiliser le registre de désignation RDS programmable permettant de désigner le premier équipement maître gestionnaire.

A titre d'exemple, une mémoire de démarrage (« boot ROM ») est configurée pour stocker un programme de démarrage exécutable uniquement par le premier équipement maître gestionnaire, par exemple le microprocesseur CPU1, lors du premier démarrage ou du démarrage à froid du système sur puce.

Une entrée INP (figure 1) peut être configurée pour recevoir un programme utilisateur. Ce programme utilisateur peut être par exemple stocké sur une carte SD coopérant avec ladite entrée INP.

Ce programme utilisateur reçu de l'entrée INP et stocké dans une mémoire programme.

Ce programme utilisateur contient au moins des instructions représentatives du schéma initial de configuration.

Dans cet exemple, le premier équipement maître gestionnaire (par exemple le microprocesseur CPU1) est configuré pour, à l'issue de sa phase de démarrage, exécuter le programme utilisateur afin d'implémenter le schéma initial de configuration.

Alors que l'on a décrit ici comme premier équipement maître gestionnaire un microprocesseur, par exemple le microprocesseur CPU1, il est tout à fait possible en variante que le premier équipement maître gestionnaire comprenne un circuit logique matériel.

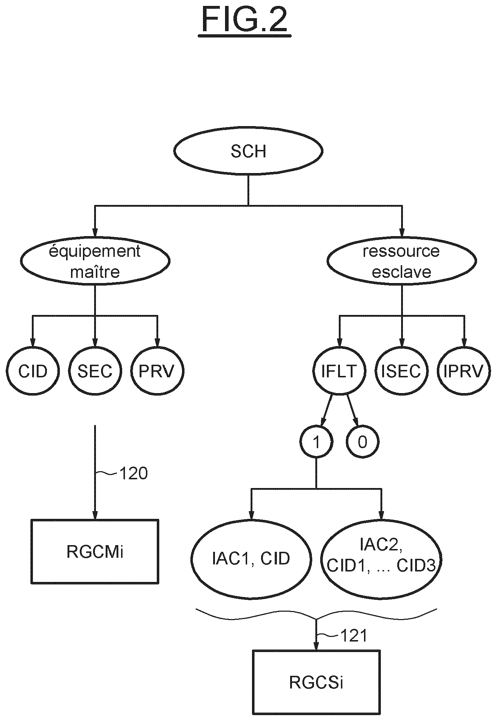

On se réfère maintenant plus particulièrement à la figure 2 pour illustrer un exemple d'ensemble d'informations de configuration définissant un schéma de configuration SCH, qui peut être le schéma initial ou bien un schéma de configuration initial modifié.

A des fins de simplification, on ne cite ici que quelques informations de configuration, parmi celles mentionnées dans la demande de brevet français précitée.

L'ensemble d'informations de configuration peut ainsi comporter pour chaque équipement maître, une information d'indentification CID. Cette information d'indentification permet d'identifier l'équipement maître parmi la liste des équipements maîtres.

Cette information d'indentification CID peut être par exemple un mot numérique.

Le jeu d'informations de configuration d'un équipement maître peut également comporter une information de sécurité SEC, par exemple un bit, indiquant, selon la valeur logique du bit, si cet équipement maître est configuré en mode sécurisé ou non.

Le jeu d'informations de configuration pour un équipement maître peut également comporter une information de privilège PRV, par exemple un bit, indiquant selon la valeur logique du bit si cet équipement maître est configuré en mode privilégié ou non.

Cette information de privilège peut comporter plusieurs bits si plusieurs niveaux de modes privilégiés sont prévus.

Ces informations de configuration associées à l'équipement maître sont stockées (étape 120) dans le jeu de registre de configuration correspondant RGCMi.

En ce qui concerne une ressource esclave, l'ensemble d'informations de configuration qui lui est associé peut comprendre par exemple pour une ressource esclave non inaccessible, une information de filtrage IFLT, par exemple un bit, destinée à indiquer, en se basant uniquement sur les informations d'identification CID des équipements maîtres, si cette ressource esclave peut être accédée par n'importe quel équipement maître ou par seulement un ou plusieurs équipements maîtres.

Ainsi, par exemple, si l'information de filtrage a la valeur logique « 0 », cela signifie qu'il n'y a pas de filtrage appliqué sur les informations d'identification et que par conséquent, une ressource esclave peut être accédée par tout équipement maître.

Il convient de noter que plusieurs équipements maîtres peuvent avoir la même information d'identification CID.

C'est le cas par exemple lorsque ces équipements maîtres comportent un microprocesseur et un ou plusieurs équipements maîtres contrôlables par ce microprocesseur. On forme alors dans ce cas un compartiment désigné par l'information d'identification CID.

Tous les équipements maîtres de ce compartiment peuvent alors avoir par exemple accès aux mêmes ressources mémoire.

Il est également possible qu'un équipement maître contrôlé par un microprocesseur, n'ait, pour des raisons de sécurité, pas la même information d'identification que le microprocesseur. C'est par exemple le cas pour un équipement du type PCI-E. Dans ce cas, ceci permet de limiter l'accès à certaines ressources mémoire de cet équipement maître du type PCI-E.

L'ensemble d'informations de configuration définissant le schéma de configuration peut comprendre en outre pour la ressource esclave non inaccessible, une première information d'accès IAC1 destinée à indiquer, dans le cas où l'information de filtrage IFLT (IFLT=1 par exemple) indique que la ressource esclave considérée peut être accédée par seulement un ou plusieurs équipements maîtres, que cette ressource esclave peut être accédée par un ou plusieurs équipements maîtres ayant la même information d'identification CID.

Dans ce cas bien entendu, l'ensemble d'informations de configuration comporte cette information d'identification correspondante CID.

Comme indiqué ci-avant, cette information d'identification CID peut se rapporter à un seul équipement maître ou alors à plusieurs équipements maîtres d'un même compartiment.

L'ensemble d'informations de configuration définissant le schéma de configuration SCH peut comprendre en outre pour cette ressource esclave non inaccessible, une deuxième information d'accès IAC2 destinée à indiquer, dans le cas où l'information de filtrage IFLT (IFLT=1) indique que la ressource esclave peut être accédée par seulement un ou plusieurs équipements maîtres, que cette ressource esclave peut être accédée par des équipements maîtres ayant des informations d'identification CID différentes. Et, dans ce cas, l'ensemble d'informations de configuration de cette ressource esclave comporte la liste CID1....CID4, par exemple, des informations d'identification des équipements maîtres correspondants.

Une telle ressource esclave qui peut être accédée par plusieurs équipements maîtres séquentiellement ou simultanément, peut être par exemple un moyen de mémoire.

L'ensemble d'informations de configuration définissant le schéma de configuration SCH pour cette ressource esclave peut comprendre également une information de sécurité ISEC, par exemple un bit, destiné à indiquer si cette ressource esclave est accessible par un équipement maître sécurisé ou non.

De même, l'ensemble d'informations de configuration peut comporter pour cette ressource esclave une information de privilège, par exemple un bit, IPRV, destiné à indiquer si cette ressource esclave est accessible par un équipement maître en mode privilégié ou non.

Toutes ces informations de configuration affectées à une ressource esclave sont stockées (étape 121) dans le jeu de registres de configuration correspondant RGCSi.

Il convient de noter ici que le premier équipement maître gestionnaire, par exemple le microprocesseur CPU1, est configuré pour être en mode sécurisé et en mode privilège à l'issue de sa phase de démarrage.

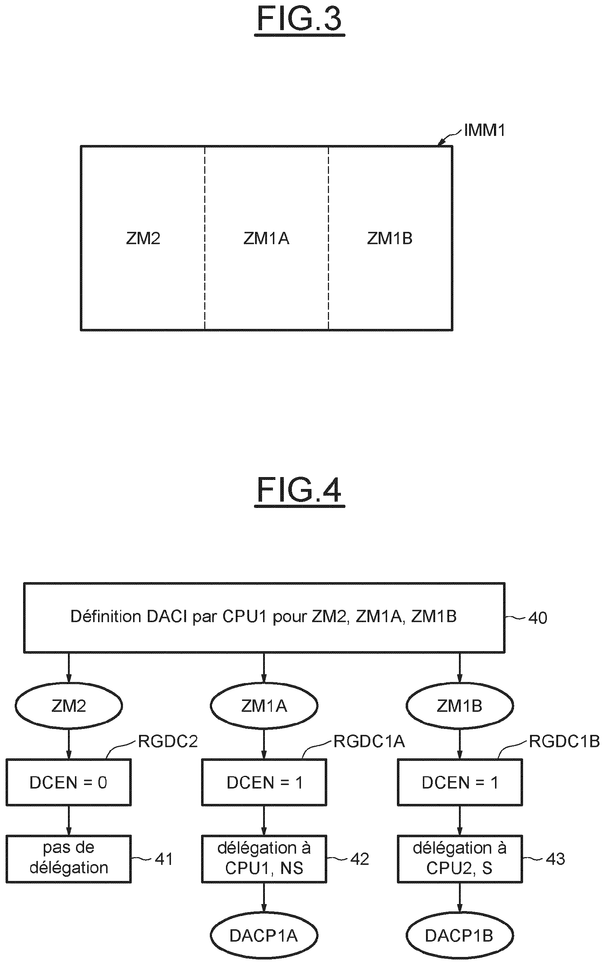

On se réfère maintenant plus particulièrement aux figures 3 et suivantes pour décrire plus en détail les caractéristiques et fonctionnalités relatives à la gestion des droits d'accès de la mémoire IMM1 ainsi qu'aux caractéristiques et à la gestion de son pare-feu RISU1.

Comme illustré sur la figure 3, la mémoire IMM1 est partitionnée ici en trois zones-mémoires, à savoir deux premières zones-mémoires ZM1A et ZM1B et une deuxième zone-mémoire ZM2.

Chacune de ces zones-mémoires peut être définie par une adresse de début et une adresse de fin.

En variante, notamment lorsque la mémoire IMM1 est une mémoire interne, ces zones-mémoires peuvent être définies par une ou plusieurs pages mémoire.

Dans le schéma de configuration, le premier équipement maître CPU1 définit (étape 40) des droits d'accès initiaux DACI pour chacune des zones-mémoires ZM1A, ZM1B et ZM2.

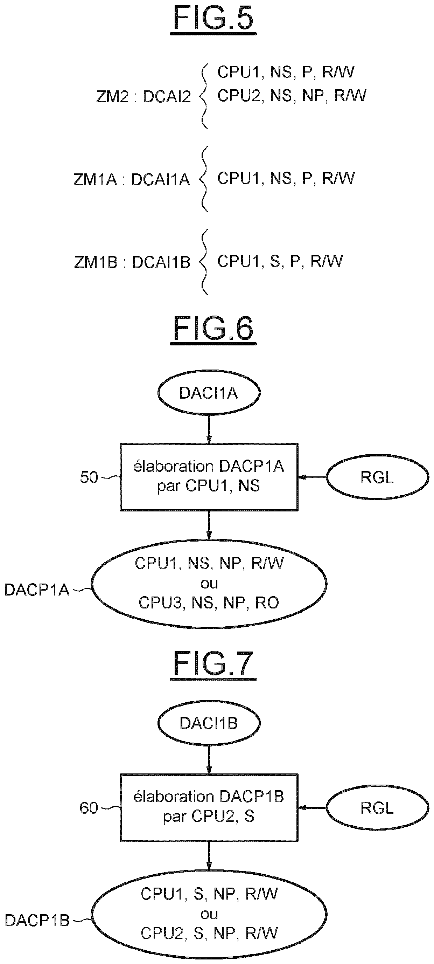

Des exemples de droits d'accès initiaux sont illustrés sur la figure 5.

Plus précisément, pour la deuxième zone-mémoire ZM2, les droits d'accès initiaux DCAI2 précisent que la zone-mémoire peut être accédée par le premier équipement maître CPU1 configuré en mode non sécurisé (NS), en mode privilégié (P) et que cet accès peut être un accès en lecture/écriture (R/W).

Les droits d'accès initiaux DCAI2 prévoient également que la deuxième zone-mémoire ZM2 puisse être adressée par l'équipement maître CPU2 configuré en mode non sécurisé, en mode non privilégié et avec un accès en lecture/écriture (R/W).

En ce qui concerne la première zone-mémoire ZM1A, les droits d'accès initiaux DCAI1A prévoient que cette première zone-mémoire puisse être accédée par l'équipement maître CPU1 configuré en mode non sécurisé et en mode privilégié avec un accès en lecture/écriture (R/W).

En ce qui concerne l'autre première zone-mémoire ZM1B, les droits d'accès initiaux DCAI1B prévoient que cette autre première zone-mémoire puisse être accédée par l'équipement maître CPU1 configuré en mode sécurisé et en mode privilégié avec un accès en lecture/écriture (R/W).

Ces droits d'accès sont inscrits, par l'intermédiaire des informations de configuration correspondantes, dans le jeu de registres RGCS1 affectés à la ressource esclave IMM1.

Si on revient maintenant plus particulièrement à la figure 4, on voit que dans ce mode de mise en œuvre, il est prévu par exemple un registre appelé ici registre de délégation, associé à chacune des zones-mémoires ZM1A, ZM1B et ZM2.

Et, ces registres de délégation RGDC2, RGDC1A, RGDC1B, par exemple situés dans le contrôleur de configuration RIFC, sont destinés à contenir un bit DCEN, dont la valeur logique va déterminer si la gestion des droits d'accès de la zone-mémoire correspondante peut ou non être déléguée à un autre équipement maître.

A titre indicatif, si la valeur de ce bit est égale à 0, alors la gestion des droits d'accès ne peut pas être déléguée tandis que si la valeur de ce bit est égale à 1, elle peut être déléguée.

Dans l'exemple de la figure 4, le registre RGDC2 contient le bit DCEN ayant la valeur logique 0 tandis que les registres RGDC1A et RGDC1B contiennent le bit DCEN ayant la valeur logique 1.

Cela signifie que, en ce qui concerne la deuxième zone-mémoire ZM2, la gestion de ses droits d'accès qui ont été confiés initialement au premier équipement maître CPU1 par exemple, ne peut pas, dans cet exemple de configuration, être déléguée à un autre équipement maître (étape 41).

Par contre, en ce qui concerne la première zone-mémoire ZM1A, la gestion de ses droits d'accès peut être déléguée à un autre équipement maître (étape 42) par exemple au microprocesseur CPU1 configuré en mode non sécurisé.

De même, en ce qui concerne la première zone-mémoire ZM1B, la gestion de ses droits d'accès peut être déléguée (étape 43) à l'équipement maître CPU2 configuré en mode sécurisé.

Ainsi, l'équipement maître CPU1, configuré en mode non sécurisé (NS) peut définir pour la première zone-mémoire ZM1A des droits d'accès particuliers DACP1A tandis que l'équipement maître CPU2 configuré en mode sécurisé (S) peut définir pour la zone-mémoire ZM1B des droits d'accès particuliers DACP1B.

Par exemple, comme illustré sur la figure 6, l'élaboration 50 des droits d'accès particuliers DACP1A par l'équipement maître CPU1 configuré en mode non sécurisé, est effectuée à partir des droits d'accès initiaux DACI1A et de règles de droits d'accès RGL.

A titre d'exemple, les droits d'accès particuliers DACP1A peuvent ainsi prévoir que la zone mémoire ZM1A peut être accédée par le premier équipement maître CPU1, configuré en mode non sécurisé (NS), en mode non privilégié (NP) avec un accès en lecture/écriture (R/W) ou bien par l'équipement maître CPU3, configuré en mode non sécurisé (NS), en mode non privilégié (NP) avec un accès uniquement en lecture (RO).

Comme illustré sur la figure 7 à titre d'exemple, l'élaboration 60 a des droits d'accès particuliers DACP1B, associés à la zone-mémoire ZM1B, par l'équipement maître CPU2 configuré en mode sécurisé (S) est effectuée à partir des droits d'accès initiaux DACI1B et des règles RGL.

Les droits d'accès particuliers DACP1B peuvent ainsi prévoir un accès par l'équipement maître CPU1 configuré en mode sécurisé (S), en mode non privilégié (NP) avec un accès en lecture/écriture (R/W) ou bien un accès par l'équipement maître CPU2, configuré en mode sécurisé, en mode non privilégié (NP), avec un accès en lecture/écriture (R/W).

Ces différents droits d'accès sont matérialisés par les bits correspondants et les informations d'identification des équipements maîtres correspondants sont stockées dans le jeu de registres RGCS1 associé à la mémoire IMM1.

Et, c'est par exemple le contrôleur de configuration RIFC qui remplace les droits d'accès initiaux par les droits d'accès particuliers, en réponse à une commande provenant des équipements maîtres ayant reçu délégation pour modifier ces droits d'accès.

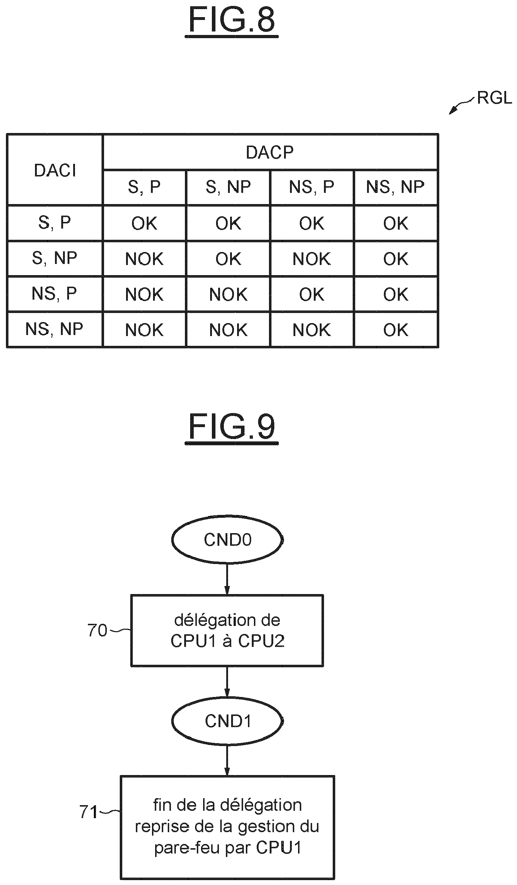

La figure 8 illustre un exemple de règles RGL représentées ici sous forme de table.

Dans la colonne de gauche, figurent les différentes configurations sécurisée (S), privilégiée (P), non sécurisée (NS) et non privilégiée (NP), qui peuvent être prévues dans les droits d'accès initiaux DACI.

Le reste de la table indique pour un droit d'accès particulier DACP si la configuration S,P ou S,NP, ou NS,P ou NS,NP est ou non autorisée.

Si elle est autorisée, ceci est matérialisé par le sigle OK et si ce n'est pas autorisé c'est matérialisé par le sigle NOK.

En d'autres termes, si les droits d'accès initiaux DACI d'une zone-mémoire prévoient un accès en mode sécurisé (S) et en mode non privilégié (NP), il ne sera pas possible pour l'équipement maître ayant reçu la délégation de modification des droits d'accès, d'attribuer un accès par exemple en mode sécurisé (S) et privilégié (P).

Par contre, il pourra autoriser un accès en mode sécurisé (S) et non privilégié (NP) ou bien un accès en mode non sécurisé (NS) et non privilégié (NP).

Bien entendu, ces règles RGL ne sont qu'un exemple non limitatif et d'autres exemples de règles sont possibles.

Comme illustré schématiquement sur la figure 9, il est tout à fait possible que la délégation de la gestion des droits d'accès par le premier équipement maître CPU1 par exemple, à l'équipement maître CPU2 par exemple, ne soit que temporaire.

Plus particulièrement, la délégation 70 peut par exemple intervenir en présence d'une condition particulière CND0, par exemple la réception d'une instruction particulière du programme utilisateur ou bien la réception d'un signal de commande sans que ces exemples ne soient limitatifs.

Et, cette délégation peut prendre fin par exemple lorsqu'une condition CND1 est remplie, par exemple la fin de l'exécution d'un sous-programme ou la réception d'un autre signal de commande, sans que ces exemples ne soient également limitatifs.

Dans ce cas, la fin de la délégation 71 peut se traduire par exemple par une reprise de la gestion du pare-feu de la mémoire IMM1 par le premier équipement maître CPU1 qui avait initié les droits d'accès initiaux.

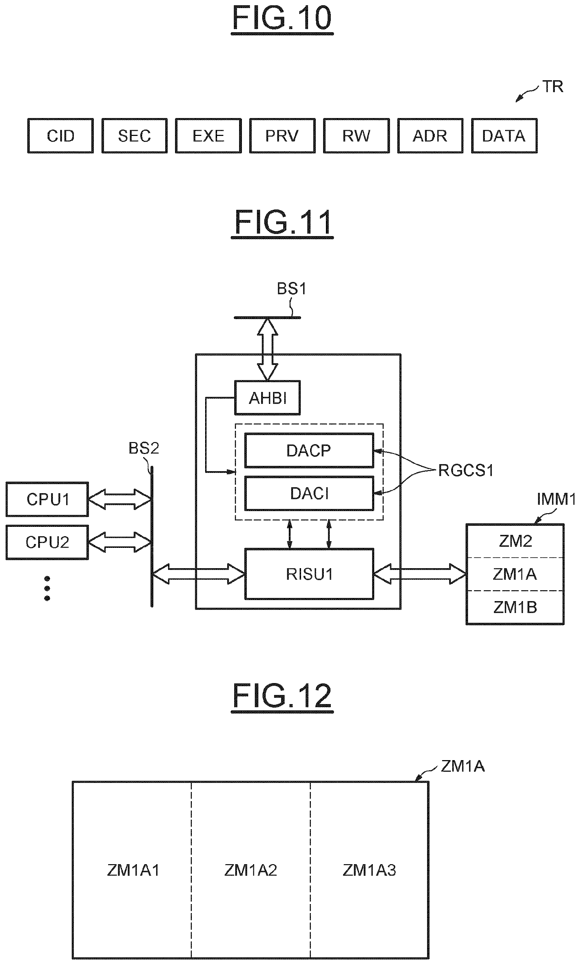

On se réfère maintenant plus particulièrement à la figure 10 pour décrire un exemple de contenu d'une transaction TR.

D'une façon générale, ici, chaque transaction TR émise par un équipement maître comprend un champ d'adressage ADR dont le contenu est destiné à adresser la ressource esclave destinataire de cette transaction.

Plus précisément, comme illustré sur la figure 10, chaque transaction TR comporte l'information d'identification CID de l'équipement maître émetteur de cette transaction, l'information de sécurité SEC, une indication EXE destinée à indiquer si cette transaction contient ou non une instruction d'exécution, l'information de privilège PRV, une information RW indiquant s'il s'agit d'une transaction en lecture ou en écriture, le champ d'adressage ADR et un champ de données DATA.

Les moyens d'adjonction, comportant pour chaque équipement maître EMi, l'unité de gestion élémentaire associée RIMUi qui est reliée au jeu de registres de configuration correspondant RGCMi, sont configurés pour ajouter à chaque transaction émise par un équipement maître au moins l'information d'identification de cet équipement maître CID.

Les moyens d'adjonction sont en outre configurés pour ajouter à chaque transaction émise par un équipement maître l'information de sécurité SEC et/ou l'information de privilège si ces deux informations ne figurent pas déjà dans la transaction émise par l'équipement maître.

La transaction TR est ensuite délivrée sur le bus lié au circuit d'interconnexion INTC.

Matériellement, cette unité de gestion élémentaire RIMUi peut comprendre un circuit logique.

Comme illustré très schématiquement sur la figure 11, le module de vérification élémentaire RISU1 est configuré pour accéder à l'ensemble des informations de configuration affecté à la ressource esclave IMM1 stocké dans le jeu de registres de configuration correspondant RGCS1, et définissant pour les différentes zones mémoires de la mémoire IMM1, les droits d'accès initiaux DACI et particuliers DACP.

La mise à jour des registres RGCS1 avec les droits d'accès initiaux DACI et éventuellement les droits d'accès particuliers DACP est effectuée par le contrôleur de configuration, par l'intermédiaire d'un bus BS1, par exemple un bus du type AHB (« Advanced High performance Bus »), et une interface de bus AHBI.

Les transactions TR émises par les différents équipements maîtres, CPU1, CPU2, ...sont transmises sur le bus BS2 puis au module de vérification élémentaire RISU1. Celui-ci vérifie alors si la transaction peut ou non accéder à la zone-mémoire considérée de la mémoire IMM1 en fonction du contenu du registre RGCS1.

L'invention n'est pas limitée aux modes de mise en œuvre et de réalisation qui viennent d'être décrits mais en embrasse toutes les variantes.

Ainsi, comme illustré sur la figure 12, le deuxième équipement maître qui a obtenu délégation (ici l'équipement CPU1 en mode non sécurisé) peut aussi partitionner la première zone mémoire ZM1A en plusieurs (ici trois) sous-zones mémoires ZM1A1, ZM1A2, ZM1A3 qui sont ici disjointes et accolées. Cela étant ces sous-zones mémoires pourraient être non accolées ou bien chevauchantes.

Les droits d'accès à ses sous-zones mémoires ZM1A1 et ZM1A3 peuvent être par exemple des droits d'accès particuliers tandis que la sous-zone mémoire ZM1A2 située entre les deux sous-zones mémoires ZM1A1 et ZM1A3 affectées de droits d'accès particuliers, peut par exemple conserver ses droits d'accès initiaux qui avaient été définis par le premier équipement maître.

## Revendications

1. Système sur puce, comprenant plusieurs équipements maîtres, plusieurs ressources esclaves, un circuit d'interconnexion (INTC) couplé entre les équipements maîtres et les ressources esclaves et capable de router des transactions entre des équipements maîtres et des ressources esclaves, dans lequel au moins une ressource esclave contient un dispositif de mémoire (IMM1) incluant au moins une première zone mémoire (ZM1A, ZM1B) et un premier équipement maître (CPU1) est configuré pour définir des droits d'accès initiaux (DACI) pour cette première zone mémoire, et pour déléguer, au moins temporairement, la gestion des accès de ladite au moins une première zone mémoire, à un deuxième équipement maître (CPU2), ce deuxième équipement maître étant configuré pour définir pour ladite au moins une première zone mémoire, des droits d'accès particuliers (DACP) à partir des droits d'accès initiaux (DACI) associés à cette première zone mémoire et de règles de droits d'accès (RGL), et le système comprend en outre des moyens de vérification (RISU1) configurés pour vérifier si une transaction destinée à ladite au moins une première zone mémoire, est bien autorisée à accéder à cette première zone mémoire (ZM1A, ZM1B) en utilisant des droits d'accès associés à cette zone mémoire et en vigueur lors de la réception de ladite transaction, les droits d'accès en vigueur incluant les droits d'accès initiaux ou les droits d'accès particuliers, ou d'autres droits d'accès.

2. Système selon la revendication 1, dans lequel le dispositif de mémoire inclut plusieurs zones mémoires et le premier équipement maître (CPU1) est configuré pour définir des droits d'accès initiaux pour chaque première zone mémoire, et pour déléguer respectivement, au moins temporairement, les gestions des accès des premières zones mémoires à plusieurs deuxièmes équipements maîtres.

3. Système selon la revendication 1 ou 2, dans lequel au moins une première zone mémoire (ZM1A) est partitionnée en plusieurs sous-zones mémoires (ZM1A1, ZM1A2, ZM1A3), et le deuxième équipement maître qui a obtenu délégation pour cette première zone mémoire (ZM1A) est configuré pour attribuer des droits d'accès respectifs pour ces sous-zones mémoires (ZM1A1, ZM1A2, ZM1A3).

4. Système selon l'une des revendications précédentes, dans lequel le premier équipement maître (CPU1) est en outre configuré pour, après avoir délégué la gestion des accès d'une première zone mémoire au deuxième équipement maître correspondant, retirer cette délégation et reprendre la gestion des accès à cette première zone mémoire.

5. Système selon l'une des revendications précédentes, dans lequel le dispositif de mémoire inclut au moins une deuxième zone mémoire (ZM2) et le premier équipement maître est en outre configuré pour définir des droits d'accès initiaux pour cette deuxième zone mémoire et pour ne pas être autorisé à déléguer la gestion des accès à cette ou ces deuxièmes zones mémoires.

6. Système selon l'une des revendications précédentes, formant un microcontrôleur ou un microprocesseur.

7. Procédé de gestion des accès à au moins un dispositif de mémoire d'un système sur puce, le système sur puce comprenant plusieurs équipements maîtres, plusieurs ressources esclaves, et un circuit d'interconnexion (INTC) couplé entre les équipements maîtres et les ressources esclaves et capable de router des transactions entre des équipements maîtres et des ressources esclaves, au moins une ressource esclave contenant ledit au moins un dispositif de mémoire incluant au moins une première zone-mémoire, le procédé comprenant :
- faire définir par un premier équipement maître des droits d'accès initiaux pour cette première zone mémoire,
- faire déléguer, au moins temporairement, par le premier équipement maître à un deuxième équipement maître, la gestion des accès de ladite au moins une première zone mémoire,
- faire définir par ce deuxième équipement maître pour ladite au moins une première zone mémoire, des droits d'accès particuliers à partir des droits d'accès initiaux associés à cette première zone mémoire et de règles de droits d'accès, et
- vérifier si une transaction destinée à ladite au moins une première zone mémoire, est bien autorisée à accéder à cette première zone mémoire en utilisant des droits d'accès associés à cette zone mémoire et en vigueur lors de la réception de ladite transaction, les droits d'accès en vigueur incluant les droits d'accès initiaux ou les droits d'accès particuliers, ou d'autres droits d'accès.

8. Procédé selon la revendication 7 pour un dispositif de mémoire incluant plusieurs premières zones mémoires (ZM1A, ZM1B), comprenant :
- faire définir par le premier équipement maître des droits d'accès initiaux pour chaque première zone mémoire, et
- faire déléguer par le premier équipement maître respectivement, au moins temporairement, les gestions des accès des premières zones mémoires à plusieurs deuxièmes équipements maîtres.

9. Procédé selon l'une des revendications 7 ou 8, comprenant en outre faire retirer par un premier équipement maître, après qu'il a délégué la gestion des accès d'une première zone mémoire au deuxième équipement maître correspondant, cette délégation et faire reprendre par le premier équipement maître, la gestion des accès à cette première zone mémoire.

10. Procédé selon l'une des revendications 7 à 9 pour un dispositif de mémoire incluant au moins une deuxième zone mémoire (ZM2), comprenant en outre :
- faire définir par le premier équipement maître des droits d'accès initiaux pour cette deuxième zone mémoire et ne pas autoriser le premier équipement maître à déléguer la gestion des accès à cette ou ces deuxièmes zones mémoires.

11. Procédé selon l'une des revendications 7 à 10, dans lequel le système sur puce forme un microcontrôleur ou un microprocesseur.
